# EUROPÄISCHE PATENTSCHRIFT

(11) **EP 1 291 096 B1**
(45) Veröffentlichungstag und Bekanntmachung des Hinweises auf die Patenterteilung: **26.01.2011**
(21) Anmeldenummer: 02018745.6
(22) Anmeldetag: 22.08.2002
(51) Int. Cl.: C21C 5/44, C08J 5/10, C08K 5/20, C04B 35/00

(54) **Verfahren zur Herstellung von Isolationsplatten und Bindemittelgemisch hierzu**
Method for producing isolating plates and binder mixture therefor
Procédé de fabrication de plaques isolantes et mélange de liants

(30) Priorität: 11.09.2001 DE 10144717
(43) Veröffentlichungstag der Anmeldung: 12.03.2003
(73) Patentinhaber: Momentive Specialty Chemicals GmbH, 58642 Iserlohn-Letmathe (DE)
(72) Erfinder: Suren, Josef, 33181 Bad Wünnenberg-Haaren (DE)

(56) Entgegenhaltungen:
- EP-A2- 0 248 980
- EP-A2- 0 540 835
- DE-C1- 4 015 440
- GB-A- 1 082 236
- JP-A- 10 130 462
- JP-A- 11 244 991
- JP-A- 57 209 741
- JP-A- 60 111 734
- GARDZIELLA A ET AL: "PHENOALHARZE ALS IMPRAEGNIERMITTEL FUER FEUERFESTE ERZEUGNISSE" STAHL UND EISEN, VERLAG STAHLEISEN, DUSSELDORF, DE, Bd. 119, Nr. 6/7, 7. Juni 1999 (1999-06-07), Seiten 135-138, XP000853047 ISSN: 0340-4803
- GARDZIELLA A ET AL: "KUNSTHARZGEBUNDENE FEUERFESTERZEUGNISSE - WELTWEITE ERFAHRUNGEN IM STAHLWERK" STAHL UND EISEN, VERLAG STAHLEISEN, DUSSELDORF, DE, Bd. 113, Nr. 6, 14. Juni 1993 (1993-06-14), Seiten 75-78, XP000369703 ISSN: 0340-4803

## Beschreibung

Die Erfindung betrifft ein Verfahren zur Herstellung von feuerfesten Isolationsplatten aus mineralischen Füllstoffen, cellulosehaltigen Produkten und einem duroplastischen Bindemittel.

Derartige Platten werden unter anderem als Kokillenabdeckplatten oder als sog. Tundishplatten für das Stranggußverfahren verwendet. Sie werden hergestellt durch Erhitzen und Härten einer zu der entsprechenden Plattenform vorgefomten Mischung, die durch Entwässerung einer wäßrigen Pulpe aus cellulosehaltigen Produkten, mineralischen Füllstoffen und einem duroplastischen Bindemittel hergestellt wird. Hierzu wird die Pulpe auf ein feines Sieb gegossen und das Wasser unter Vakuum abgezogen. Dieser Verfahrensschritt ist sehr zeitaufwendig und es besteht das Bedürfnis, ihn zu verkürzen.

Das üblicherweise verwendete duroplastische Bindemittel ist ein Novolak-Härter-Gemisch, wobei als Novolake relativ hochkondensierte Produkte eingesetzt werden müssen, mit mittleren Molekulargewichten von 800 - 900 und Fließstrecken von etwa 20 - 30 mm. Mit diesen Novolaken werden allerdings nur mäßige Festigkeiten der Isolationsplatten erreicht. Eine Verbesserung der Festigkeitswerte ergibt sich bei Verwendung von Novolaken mit niedrigeren mittleren Molekulargewichten bzw. größeren Fließstrecken. Jedoch quellen diese Bindemittel in der Pulpe stärker auf. Dadurch verlängert sich die Entwässerungszeit drastisch, so daß der Einsatz dieser Harze aus wirtschaftlichen Gründen nicht angebracht ist.

Es ist daher Aufgabe der Erfindung, ein Verfahren zur Herstellung von Isolationsplatten bereitzustellen, das im Prinzip dem bislang übliche Verfahren entspricht, bei dem aber die Entwässerungszeiten verkürzt sind. Es ist ferner Aufgabe der Erfindung, ein Verfahren bereitzustellen, mit dem sich Isolationsplatten hoher Festigkeit herstellen lassen, ohne daß die Entwässerungszeit verlängert wird.

Die Lösung der Aufgaben erfolgt durch ein Verfahren gemäß der Ansprüche 1 bis 5, sowie durch Pulverharz- und Bindemittelgemische gemäß der Ansprüche 6 bis 8.

Es wurde gefunden, daß durch Verwendung einer wäßrigen Pulpe aus cellulosehaltigen Produkten, mineralischen Füllstoffen und Novolak, die zusätzlich eines oder mehrere Produkte aus der Gruppe der Fettsäureamide oder der substituierten Fettsäureamide enthält, die Entwässerungszeiten wesentlich verkürzt werden. Die Festigkeiten der aus diesen Mischungen hergestellten Platten wird durch diesen Zusatz nicht verschlechtert. Es wurde weiterhin gefunden, daß diese Zusätze aus der Gruppe der Fettsäureamide oder der substituierten Fettsäureamide es ermöglichen, daß Novolake mit niedrigerem mittlerem Molekulargewicht, d.h., mit größerer Fließstrecke, eingesetzt werden können, ohne daß die Entwässerungszeit verlängert wird. Somit werden Isolationsplatten erhalten, deren Festigkeiten um 30 % höher sind als die gemäß dem Stand der Technik hergestellten.

Die zugegebenen Zusätze aus der Gruppe der Fettsäureamide oder der substituierten Fettsäureamide sind bei Raumtemperatur feste bis halbfeste Substanzen oder Substanzgemische der allgemeinen Formeln 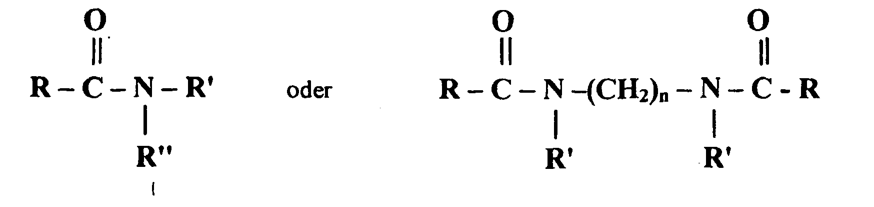 , worin
n eine Zahl im Bereich von 1 bis 6 ist,
R eine verzweigte oder unverzweigte Alkylkette mit 10 bis 30 C-Atomen bedeutet und R' und R" gleich oder verschieden sein können und entweder Wasserstoff oder eine verzweigte oder unverzweigte Alkylkette mit 1 bis 6 C-Atomen bedeuten.

Bevorzugte Produkte aus dieser Gruppe sind Oleamid, Behenamid, Stearamid und insbesondere Ethylenbisstearamid.

Die Verwendung derartiger Produkte aus der Gruppe der Fettsäureamide oder der substituierten Fettsäureamide mit Epoxidharzen oder Phenolharzen ist an sich bekannt.

So dienen z.B. derartige Fettamide gemäß JP-A 10130462 (C.A. 129:55251) als Trennmittel in Epoxidharzformulierungen.

Bindemittel aus Phenolharz kombiniert mit substituierten und unsubstituierten Fettsäureamiden werden vornehmlich als Bindemittel für Sand bei der Herstellung von Formen im Gießereisektor beschrieben [JP-A 60111734 (C.A. 103:182359) oder JP-A 57209741 (C.A.98:165573)].

Gemäß einer Untersuchung über den Einfluß von Additiven auf das Fließ- und Härtungsverhalten von Phenolharz-Formmassen (C.A. 104:34743) wurde festgestellt, daß mit zunehmendem Gehalt an Trennmitteln das Fließverhalten verbessert wird aber auch, daß mit zunehmender Menge von z.B. Ethylenbisstearylamid die Durchhärtungsrate verschlechtert wird. Damit ist für den Fachmann zu erwarten, daß sich auch die Festigkeiten der entstehenden Produkte vermindern.

Im erfindungsgemäßen Verfahren werden die Produkte aus der Gruppe der Fettsäureamide oder der substituierten Fettsäureamide den erfindungsgemäßen Mischungen in einer Menge von 1 bis 10 Gew.-%, bevorzugt von 3 bis 5 Gew.-%, bezogen auf die Menge des Harzes des duroplastischen Bindemittels zugegeben. Die Zugabe erfolgt dabei bevorzugt zum Novolak.

Es wurde weiterhin gefunden, daß die Festigkeiten der Isolationsplatten verbessert sind und daß die Entwässerungszeiten wesentlich verkürzt sind, wenn die Zusätze aus der Gruppe der Fettsäureamide oder der substituierten Fettsäureamide mit dem Pulverharz nicht nur vermischt sind, sondern wenn sie mit diesem Harz verschmolzen werden und das resultierende Gemisch nach dem Erstarren pulverisiert wird.

Es wird somit ein neues Pulverharzgemisch erhalten, hergestellt durch Verschmelzen eines duroplastischen Harzes mit einem Zusatz aus der Gruppe der Fettsäureamide oder substituierten Fettsäureamide und Pulverisieren der erstarrten Schmelze.

Dieses Pulverharzgemisch kann dann mit dem Härter für den Novolak sowie ggf. weiteren Füll- und Zusatzstoffen vermischt werden. So entsteht das Bindemittelgemisch zur Durchführung des erfindungsgemäßen Verfahrens. Der bevorzugte latente Härter für die Novolake ist Hexamethylentetramin, das dem Novolak, bzw. dem Pulverharzgemisch aus Novolak und einem Zusatz aus der Gruppe der Fettsäureamide oder substituierten Fettsäureamide in einer Menge von 3 bis 16 Gew.-%, bezogen auf das Gewicht des Novolaks, zugemischt wird.

Als Novolake sind alle im sauren Medium hergestellten Kondensationsprodukte aus phenolischen Verbindungen und einem Aldehyd, insbesondere Formaldehyd in einem molaren Verhältnis von phenolischer Verbindung zu Aldehyd von 1 : 0,9 bis 1: 0,2 und einem Schmelzpunkt von 50 bis 110°C einsetzbar. Um schonend zu arbeiten, können Gemische aus nieder- und höherschmelzenden Novolaken Verwendung finden. Die bevorzugten Novolake haben ein mittleres Molekulargewicht von 500 bis 800, insbesondere von 600 bis 750, bzw. eine Fließstrecke im Bereich von 35 bis 55 mm. Die Menge der eingesetzten Novolake liegt im Bereich von 1 bis 10 Gew.%, bezogen auf die trockene Gesamtmischung.

Als phenolische Verbindungen können ein- oder mehrkernige Phenole oder Gemische der genannten Verbindungsklassen eingesetzt werden, und zwar sowohl ein- als auch mehrkernige Phenole. Beispiele hierfür sind das Phenol selbst, sowie dessen alkylsubstituierten Homologe, wie o-, m- oder p-Kresol, Xylole oder höher alkylierte Phenole, außerdem mehrwertige Phenole wie Resorcin oder Brenzkatechin, sowie mehrkernige Phenole wie Naphthole, Bisphenol A oder Bisphenol F.

Das Phenol bzw. die phenolische Verbindung oder das Gemisch phenolischer Verbindungen wird mit Aldehyd, insbesondere mit Formaldehyd oder einer Formaldehyd abspaltenden Verbindung zu dem gewünschten Novolak umgesetzt. Die Novolake können durch übliche Modifizierungsmittel, wie z.B. Epoxidharze, Kautschuke, Polyvinylbutyral und anorganische Zusätze modifiziert sein.

Der Aufbau der entsprechenden Mischungen für die Herstellung der Isolationsplatten entspricht sowohl hinsichtlich der Zusammensetzung der einzelnen Komponenten als auch bezüglich ihrer Mengen dem der bislang für diesen Einsatz üblichen und bekannten Mischungen. Als mineralische Füllstoffe können alle in der Feuerfestindustrie üblicherweise verwendeten Füllstoffe eingesetzt werden. Bevorzugt sind Siliciumdioxid, Magnesium- und Aluminiumoxid, Magnesit, Bauxit oder Andalusit und ihre Abmischungen in beliebigen Mischungsverhältnissen.

Als cellulosehaltige Produkte können im Prinzip alle kleinteiligen cellulosehaltigen Rohstoffe eingesetzt werden, wie z.B. Cellulosefasern, Holzfasern, -späne, -mehl oder - schliff, insbesondere aber Papierschnitzel.

Die einzelnen Komponenten werden in an sich beliebiger Reihenfolge miteinander und mit Wasser vermischt und in an sich bekannter Weise zu einer Pulpe verarbeitet, die dann unter Formgebung auf ein flächiges, feinteiliges Sieb gegossen und unter Vakuum entwässert wird. Die als Filterkuchen erhaltene "grüne" Platte wird danach bei Temperaturen oberhalb 120°C, bevorzugt oberhalb 150°C gehärtet.

## Patentansprüche

1. Verfahren zur Herstellung von Isolationsplatten aus einer wäßrigen Pulpe aus mineralischen Füllstoffen, cellolosehaltigen Produkten und einem Bindemittel auf Basis eines Novolaks, **dadurch gekennzeichnet, daß** eine Pulpe verwendet wird, die einen Zusatz aus der Gruppe der Fettsäureamide oder substituierten Fettsäureamide enthält.

2. Verfahren nach Anspruch 1, **dadurch gekennzeichnet, daß** der Zusatz aus der Gruppe der Fettsäureamide oder substituierten Fettsäureamide mit dem Bindemittel vermischt wird.

3. Verfahren nach Anspruch 2, **dadurch gekennzeichnet, daß** ein Bindemittelgemisch verwendet wird, bei dem der Novolak mit dem Zusatz aus der Gruppe der Fettsäureamide oder substituierten Fettsäureamide verschmolzen, dieses Gemisch nach dem Erstarren pulverisiert und mit dem Härter und ggf. Zusatzstoffen vermischt wurde.

4. Verfahren nach einem oder mehreren der Ansprüche 1 bis 3, **dadurch gekennzeichnet, daß** als Zusatz aus der Gruppe der Fettsäureamide oder substituierten Fettsäureamide Ethylenbisstearylamid verwendet wird.

5. Verfahren nach einem oder mehreren der Ansprüche 1 bis 4, **dadurch gekennzeichnet, daß** ein Novolak verwendet wird, der ein mittleres Molekulargewicht von 500 - 800, insbesondere von 600 - 750 hat.

6. Pulverharzgemisch zur Durchführung des Verfahrens gemäß der Ansprüche 1 bis 5, hergestellt durch Verschmelzen von Novolak mit einem Zusatz aus der Gruppe der Fettsäureamide oder substituierten Fettsäureamide und Pulverisieren der erstarrten Schmelze.

7. Pulverharzgemisch nach Anspruch 6, **dadurch gekennzeichnet, daß** es den Zusatz aus der Gruppe der Fettsäureamide oder substituierten Fettsäureamide in einer Menge von 1 bis 10 Gew.-%, bezogen auf den Novolak, enthält.

8. Bindemittelgemisch zur Durchführung des Verfahrens gemäß einem oder mehreren der Ansprüche 1 bis 5, enthaltend Pulverharzgemisch gemäß der Ansprüche 6 und 7, Härter für den Novolak sowie ggf. weitere Füll- und Zusatzstoffe.

## Claims

1. Process for producing insulation sheets made of an aqueous pulp made of mineral fillers, cellulose-containing products and a binder based on a novolak, **characterized in that** a pulp is used which comprises an addition from the group of the fatty acid amides or substituted fatty acid amides.

2. Process according to Claim 1, **characterized in that** the addition from the group of the fatty acid amides or substituted fatty acid amides is mixed with the binder.

3. Process according to Claim 2, **characterized in that** a binder mixture is used in which the novolak was fused with the addition from the group of the fatty acid amides or substituted fatty acid amides, and the said mixture is pulverized after solidification and was mixed with the hardener and optionally with additives.

4. Process according to one or more of Claims 1 to 3, **characterized in that** the addition used from the group of the fatty acid amides or substituted fatty acid amides comprises ethylene bisstearylamide.

5. Process according to one or more of Claims 1 to 4, **characterized in that** a novolak is used which has an average molecular weight of from 500 to 800, in particular from 600 to 750.

6. Powder resin mixture for carrying out the process according to Claims 1 to 5, produced via fusion of novolak with an addition from the group of the fatty acid amides or substituted fatty acid amides, and pulverization of the solidified melt.

7. Powder resin mixture according to Claim 6, **characterized in that** it comprises an amount of from 1 to 10% by weight, based on the novolak, of the addition from the group of the fatty acid amides or substituted fatty acid amides.

8. Binder mixture for carrying out the process according to one or more of Claims 1 to 5, comprising powder resin mixture according to Claims 6 and 7, hardener for the novolak, and also optionally further fillers and further additives.

## Revendications

1. Procédé pour la fabrication de plaques d'isolation à partir d'une pulpe aqueuse constituée par des charges minérales, des produits contenant de la cellulose et un liant à base d'une novolaque, **caractérisé en ce qu'**on utilise une pulpe, qui contient un additif du groupe des amides d'acides gras ou des amides d'acides gras substitués.

2. Procédé selon la revendication 1, **caractérisé en ce que** l'additif du groupe des amides d'acides gras ou des amides d'acides gras substitués est mélangé avec le liant.

3. Procédé selon la revendication 2, **caractérisé en ce qu'**on utilise un mélange de liants, dans lequel la novolaque est fondue avec l'additif du groupe des amides d'acides gras ou des amides d'acides gras substitués, ce mélange est pulvérisé après la solidification et mélangé avec le durcisseur et le cas échéant des additifs.

4. Procédé selon l'une ou plusieurs des revendications 1 à 3, **caractérisé en ce qu'**on utilise comme additif du groupe des amides d'acides gras ou des amides d'acides gras substitués de l'éthylène-bisstéarylamide.

5. Procédé selon l'une ou plusieurs des revendications 1 à 4, **caractérisé en ce qu'**on utilise une novolaque qui présente un poids moléculaire moyen de 500-800, en particulier de 600-750.

6. Mélange de résines sous forme de poudre pour réaliser le procédé selon les revendications 1 à 5, préparé par fusion de novolaque avec un additif du groupe des amides d'acides gras ou des amides d'acides gras substitués et pulvérisation de la masse fondue solidifiée.

7. Mélange de résines sous forme de poudre selon la revendication 6, **caractérisé en ce qu'**il contient l'additif du groupe des amides d'acides gras ou des amides d'acides gras substitués en une quantité de 1 à 10% en poids, par rapport à la novolaque.

8. Mélange de liants pour réaliser le procédé selon l'une ou plusieurs des revendications 1 à 5, contenant un mélange de résines sous forme de poudre selon les revendications 6 et 7, un durcisseur pour la novolaque ainsi que le cas échéant d'autres charges et additifs.
